# EUROPÄISCHE PATENTANMELDUNG

(11) **EP 4 053 536 A1**
(43) Veröffentlichungstag der Anmeldung: **07.09.2022**
(21) Anmeldenummer: 22154696.3
(22) Anmeldetag: 02.02.2022
(51) Int. Cl.: G01N 15/06, G01N 21/94

(54) **VORRICHTUNG ZUR PRÜFUNG DER TECHNISCHEN SAUBERKEIT**

(30) Priorität: 02.03.2021 DE 102021001122
(71) Anmelder: Hydac International GmbH, 66280 Sulzbach/Saar (DE)
(72) Erfinder: Schindler, Christian, 66578 Schiffweiler (DE); Schwarzkopf, Alexander, 66386 St. Ingbert-Hassel (DE); Bähr, Fabian, 66265 Heusweiler (DE); Müller, Christopher, 66538 Neunkirchen (DE); Schittek, Thomas, 57350 Schoeneck (FR)
(74) Vertreter: Bartels und Partner, Patentanwälte

(57) **Zusammenfassung**

Vorrichtung zur Prüfung der Technischen Sauberkeit, zumindest bestehend aus einer ersten Station (10), in der ein Membranmaterial (20) mit einer Probe beschickt wird und etwaig in der Probe vorhandene Verschmutzungen sich auf dem Membranmaterial (20) ablagern und mit einer zweiten Station (12), in der die Probe der ersten Station (10) einer optischen Prüfung unter Einsatz einer Kamera (22) unterzogen ist.

## Beschreibung

Die Erfindung betrifft eine Vorrichtung zur Prüfung der Technischen Sauberkeit.

Prüfvorrichtungen der verschiedensten Art sind bekannt. So zeigt beispielsweise DE 10 2009 020 311 A1 eine Prüfvorrichtung zur Bestimmung der elektrischen Ladung eines strömenden Fluids mit einer ersten fluiddurchlässigen Platte, die isolierend in einem von dem Fluid durchströmten Gehäuse festgelegt ist, und mit einer zweiten fluiddurchlässigen Platte, die mit gleichbleibendem diskreten Abstand zu der ersten Platte isolierend in dem Gehäuse festgelegt ist, wobei die Kapazität der Anordnung der ersten und zweiten Platte messbar ist. Dergestalt sind die angesprochenen Platten von ihrer Funktion her wie Kondensatorplatten aufgebaut mit einem daran angeordneten elektrischen Abgriff ihrer Potenziale und über die Messung ihrer Kapazität lässt sich eine Aussage über die Ladungsdichte in dem Fluid als Probe treffen.

Der hier angesprochene Bereich Technische Sauberkeit beschäftigt sich im Allgemeinen mit der sogenannten Sauberkeitsprüfung, worunter die messtechnische Erfassung von Verschmutzungen an Prüfobjekten fällt. Im Rahmen der Technischen Sauberkeitsprüfung wird regelmäßig keine direkte optische oder taktile Messung am Prüfobjekt, wie einem technischen Bauteil, durchgeführt, sondern vielmehr ist ein Probenentnahmeschritt notwendig. Um zu einer dahingehenden Probe zu gelangen, werden Bauteile bei der Analyse der technischen Sauberkeit zuerst "Beprobt", was fachsprachlich auch mit Extraktion bezeichnet wird, bei der etwaige Partikel durch einen Reinigungsschritt vom Bauteil entfernt und anschließend im Rahmen einer Filtration oder Probe erhalten werden. Mittels Analysefiltern respektive Analysemembranen kann diese Filtration vorgenommen werden, wobei die Partikel aufgefangen werden und das Reinigungsmedium kann dabei über den Analysefilter respektive die Membran abfließen. Zu beachten ist, dass bei der Technischen Sauberkeitsprüfung ein Bauteil nur einmalig für eine Extraktion genutzt werden kann, da durch eine erstmalige Beprobung oder Extraktion bereits Partikel entfernt werden. Ziel der Extraktion sollte in jedem Fall daher die vollständige Erfassung aller Partikel sein, da schon einzelne Partikel für ein Bauteil funktionskritisch sein können.

Durch den Produktkatalog D 79.000.0/04.09 Filter Systems der HYDAC INTERNATIONAL ist ein sogenanntes "ContaminationTest Module CTM" bekannt (Seite 79 des Katalogs), das ein Modulsystem zur Untersuchung von Bauteilen bezüglich ihrer Technischen Sauberkeit betrifft. Für die Sauberkeitsprüfung wird dabei eine mögliche Feststoffverschmutzung von einer Bauteiloberfläche durch Nassbeprobung abgereinigt und mittels einer Membran aufgefangen. Die auf der Membran insoweit abgeschiedene Probe mit den Verschmutzungspartikeln wird anschließend im Rahmen eines Labors optisch ausgewertet; regelmäßig auch unter Einsatz von Lichtmikroskopen.

Dergestalt sind die aktuellen Verfahren und Anlagen betreffend die Prüfung der Technischen Sauberkeit durch eine rein manuelle Anwendung geprägt und bereits die Auswertung des Probenmaterials in einem Labor erfordert einen hohen Zeitbedarf.

Ausgehend von diesem Stand der Technik liegt der Erfindung die Aufgabe zugrunde, eine Vorrichtung zu schaffen mit der sich die Prüfung der Technischen Sauberkeit weitgehend automatisieren lässt.

Eine dahingehende Aufgabe löst eine Vorrichtung zur Prüfung der Technischen Sauberkeit mit den Merkmalen des Patentanspruches 1 in seiner Gesamtheit.

Dadurch, dass erfindungsgemäß die Vorrichtung zumindest aus einer ersten Station besteht, in der ein Membranmaterial mit einer Probe beschickt wird und etwaig in der Probe vorhandene Verschmutzungen sich auf dem Membranmaterial ablagern und aus einer zweiten Station, in der die Probe der ersten Station einer optischen Prüfung unter Einsatz einer Kamera unterzogen ist, lässt sich weitgehend automatisiert die Prüfung der Technischen Sauberkeit vornehmen.

Während an der ersten Station im Rahmen der Extraktion von Seiten eines zu analysierenden oder zu prüfenden Bauteils die Probe originär kommt und auf dem Membranmaterial abgelegt wird, findet in der nachfolgenden zweiten Station bereits die automatisch durchgeführte Probenüberprüfung unter Einsatz einer Kamera statt, die insoweit die Probe optisch prüft. Das Fluid mit dem im Rahmen der Extraktion das zu untersuchende Bauteil gezielt abgereinigt wird, ist eine Flüssigkeit, wie eine Reinigungsflüssigkeit. Dergestalt wird die mit dem Reinigungsfluid mitgeführte Verschmutzung auf dem Membranmaterial als zu untersuchende Probe abgelagert und das Reinigungsfluid wird nach Durchströmen des Membranmaterials aus der Prüfvorrichtung im Wesentlichen abgeführt.

Bei einer bevorzugten Ausführungsform der erfindungsgemäßen Vorrichtung ist vorgesehen, dass der zweiten Station mindestens eine weitere, dritte Station nachfolgt, die dem Ausschleusen der Probe nach der Kameraauswertung dient. Dergestalt sind Proben-Aufbewahrungspositionen realisiert, die es erlauben im Sinne einer Dokumentation Membranmaterial mit der analysierten Probe auszuschleusen und zu hinterlegen, beispielsweise um eine derart ausgeschleuste dokumentierte Probe mit Neuproben zu vergleichen, um hierdurch Rückschlüsse auf die Entwicklung der Bauteilsauberkeit zu ziehen.

Des Weiteren können nachfolgende Stationen, wie eine dritte, vierte oder fünfte Station dazu dienen, das Membranmaterial zu trocknen, sofern das Beaufschlagen des Membranmaterials zum Aufbringen der Probe mittels einer Flüssigkeit, wie einer Reinigungs- oder Spülflüssigkeit, erfolgt ist.

Bei einer weiteren besonders bevorzugten Ausführungsform der erfindungsgemäßen Vorrichtung ist vorgesehen, dass zumindest die beiden ersten Stationen, vorzugsweise alle Stationen, in linearer Reihenfolge hintereinander angeordnet sind. Dergestalt ist eine exakte Positionierung des Membranmaterials in den einzelnen Stationen erreicht und insbesondere lässt sich im Rahmen der Linearanordnung ein platzsparender Aufbau für die Vorrichtung als Ganzes erreichen. Das lineare Konzept hat sich auch insofern als vorteilhaft erwiesen, als dass die Membran kontinuierlich in Längsrichtung verschoben und nach Ausschleusen aus der Vorrichtung automatisiert in einen hierfür vorgesehenen Entsorgungsbehälter gleiten und dort bevorratet werden kann. Ferner lässt sich im Rahmen des Linearkonzepts eine zeitlich enge Taktung für die einzelnen Stationen erreichen, so dass eine rasche, zeitnahe Messwerterfassung möglich ist; anders als bei möglichen rotatorischen Auswertungskonzepten, bei denen im Sinne einer Karusselanordnung die einzelnen Positionen erst im Rahmen einer Drehbewegung angefahren werden müssen.

Bei einer besonders bevorzugten Ausführungsform der erfindungsgemäßen Vorrichtung ist vorgesehen, dass die erste Station einen mittels eines Aktuators öffen- und schließbaren Membranhalter aufweist, der im geöffneten Zustand das Ein- und Ausbringen des Membranmateriales erlaubt und im geschlossenen Zustand das Aufbringen der Probe von außen her. Im geschlossenen Zustand stellt der Membranhalter sicher, dass eingebrachtes Probenmaterial während des Auftragvorgangs auf das Membranmaterial nicht ungewollt nach außen in die Umgebung gelangt und des Weiteren wird im Rahmen des Schließvorganges eine Klemmung für das Membranmaterial erreicht und damit seine sichere Positionierung innerhalb der Gesamtvorrichtung.

Vorzugsweise ist für den Transport des Membranmaterials innerhalb der Vorrichtung eine Transporteinrichtung vorgesehen, die mittels eines weiteren Aktuators öffen- und schließbar ist und die im geschlossenen Zustand mittels eines weiteren dritten Aktuators zusammen mit dem Membranmaterial quer zu einer Verfahrrichtung des Membranhalters bewegbar ist. Dergestalt ist ein gezielter Vorschub für das Membranmaterial erreicht und insbesondere erlaubt die Transporteinrichtung einen schonenden Transport des Membranmaterials, ohne dass es ungewollt zu einem Verzug des Membranmaterials durch Quer- und Längskräfte kommen kann. Vorzugsweise wird mittels der Transporteinrichtung eine Vorschubgeschwindigkeit realisiert, die der Geschwindigkeit bei der Zeilenabtastung mittels der Kamera entspricht, so dass mit Freigabe des Membranmaterials durch den Membranhalter ein quasi-kontinuierlicher Prozessfortschritt zumindest im Rahmen der beiden ersten Stationen "Probenaufbringung und Kameraauswertung" erreicht ist.

Vorzugsweise ist dabei vorgesehen, dass das Membranmaterial sich von einer Bevorratungsrolle mittels der Transporteinrichtung abwickeln lässt. Dergestalt lässt sich das bahnförmige Membranmaterial mit großen Längen auf der Bevorratungsrolle ablegen, so dass mit nur einer Rolle von Membranmaterial sich eine Vielzahl von Probenextraktionen und Auswertungen vornehmen lassen.

Vorzugsweise ist dabei das Membranmaterial oberhalb einer zumindest teilweise fluiddurchlässigen Stützeinrichtung verfahrbar, an deren Längsränder seitlich Rahmenteile der Transporteinrichtung anschließen. Dergestalt ist das Membranmaterial beim Verfahren in die einzelnen Positionen gestützt und die Rahmenteile der Transporteinrichtung erlauben für den Transport des Membranmaterials einen randseitigen Klemmangriff mit dem einem etwaigen Verzug des Membranmaterials sicher begegnet ist.

Vorzugsweise ist ferner vorgesehen, dass im Bereich einer Ausschleussstrecke für das Membranmaterial eine Klemmeinrichtung vorhanden ist, die mittels eines weiteren vierten Aktuators eine Klemmung oder Freigabe des Membranmateriales vornimmt. Dergestalt lässt sich sowohl auf der Eingangsseite der Vorrichtung als auch auf deren Ausgangsseite eine Klemmung für das Membranmaterial während des Probenauftrages erreichen, wobei eingangsseitig der Membranhalter die Klemmung vornimmt und zeitgleich die Klemmeinrichtung auf der Ausgangsseite der Vorrichtung.

Bei einer besonders bevorzugten Ausführungsform der erfindungsgemäßen Vorrichtung ist vorgesehen, dass die Kamera eine Zeilenkamera ist, deren Abtastzeilen quer zur Verfahrrichtung des Membranmaterials verlaufen. Dergestalt lassen sich alle Arten von Partikeln einschließlich faserartiger Partikel auf dem Membranmaterial kameratechnisch erfassen. Dergestalt lässt sich über die Kamera eine Breiten- und Längenmessung durchführen sowie die Partikelanzahl bestimmen.

Ein Verfahren zum Durchführen eines Betriebes mit der vorstehend vorgestellten Vorrichtung ist jedenfalls dadurch gekennzeichnet, dass das Membranmaterial beim Aufbringen der Probe im geschlossenen Membranhalter in der ersten Station festgelegt ist und bei geöffnetem Membranhalter mit Transport des Membranmaterials mittels der Transporteinrichtung die Zeilenabtastung mittels der Zeilenkamera in der zweiten Station erfolgt. Dergestalt lässt sich weitgehend automatisiert eine Prüfung der Technischen Sauberkeit von Bauteilen vor Ort vornehmen. So lässt sich die Vorrichtung als Ganzes verfahrbar in einem Gehäuse aufnehmen, das über entsprechende Schnittstellen verfügt zum fluidischen Anschließen der Eingangsseite des Membranhalters an eine Extraktionseinrichtung für die Probenentnahme an dem zu untersuchenden Bauteil. Dies hat so keine Entsprechung im Stand der Technik.

Im Folgenden wird die erfindungsgemäße Vorrichtung anhand eines Ausführungsbeispiels näher erläutert. Dabei zeigen in prinzipieller und nicht maßstäblicher Darstellung die
- Figur 1: eine perspektivische Draufsicht auf wesentliche Teile der Vorrichtung;
- Figur 2: in der Art eines Ablaufplans exemplarisch eine Draufsicht auf einzelne Stationen der Vorrichtung nach der Figur 1;
- Figur 3: in der Art eines Längsschnittes die wesentlichen Komponenten des in der Vorrichtung verwendeten Membranhalters; und
- Figur 4: in der Art einer perspektivischen Schrägansicht die wesentlichen Komponenten der für die Vorrichtung nach Figur 1 verwendeten Transporteinrichtung.

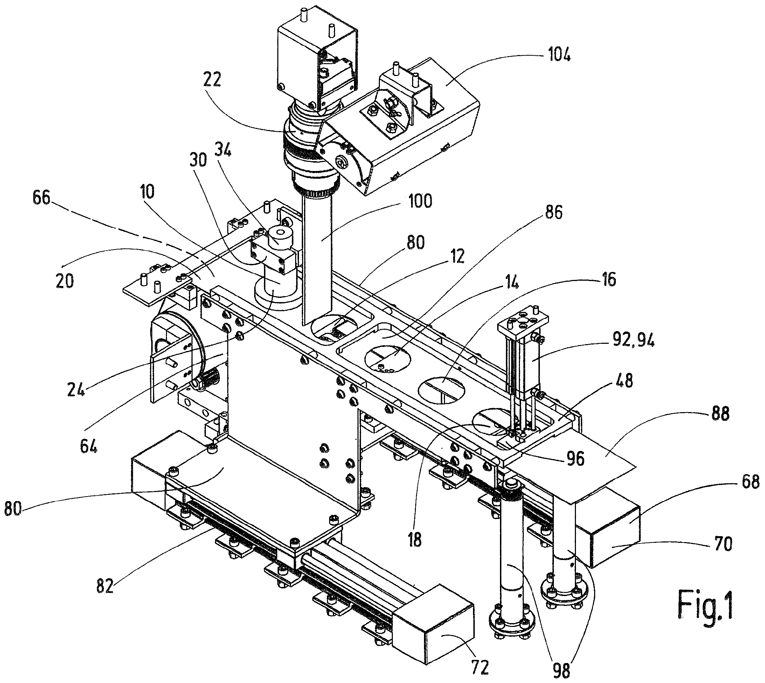

Die Figur 1 zeigt die wesentlichen Funktionskomponenten der Vorrichtung zur Prüfung der Technischen Sauberkeit von Bauteilen. Die Vorrichtung weist eine erste Station 10, eine zweite Station 12, eine dritte Station 14, eine vierte Station 16 und eine fünfte Station 18 auf. In der ersten Station 10 lässt sich ein bandförmiges Filter- oder Membranmaterial 20 mit einer Probe beschicken und etwaig in der Probe vorhandene Verschmutzungen, die sich auf dem Membranmaterial 20 ablagern, werden in der zweiten Station 12 nach Verlassen der ersten Station 10 einer optischen Prüfung unter Einsatz einer Kamera 22 unterzogen. Das Membranmaterial 20 auf dem die Probe abgelegt wird, ist fluiddurchlässig und kann geschäumt sein oder bevorzugt aus einem Siebgewebe aus Polyester-, oder Polyamid- sowie Nylonfäden bestehen. Das Siebgewebe des Membranmaterials 20 hat eine Porenweite, die einerseits das Ablegen einer Probe mit der Partikelverschmutzung erlaubt und andererseits die Reinigungsflüssigkeit durchlässt, mit der ein Bauteil zwecks Erhalt der Verschmutzung abgereinigt worden ist. Die dahingehende Abreinigung eines Bauteils zwecks Überprüfen der Technischen Sauberkeit ist üblich, so dass an dieser Stelle hierauf nicht mehr näher eingegangen wird.

Die weiteren Stationen 14, 16, 18 können der Trocknung des Membranmaterials 20 dienen und gleichzeitig werden dergestalt Probenmuster erhalten, die für eine Dokumentation notwendig sind. Gemäß der Darstellung der Figur 1 ist das bandförmige Membranmaterial 20 in die erste Station 10 eingebracht worden und die weiteren Stationen 12, 14, 16, 18 sind von dem Membranmaterial 20 noch nicht abgedeckt respektive noch nicht überfahren worden.

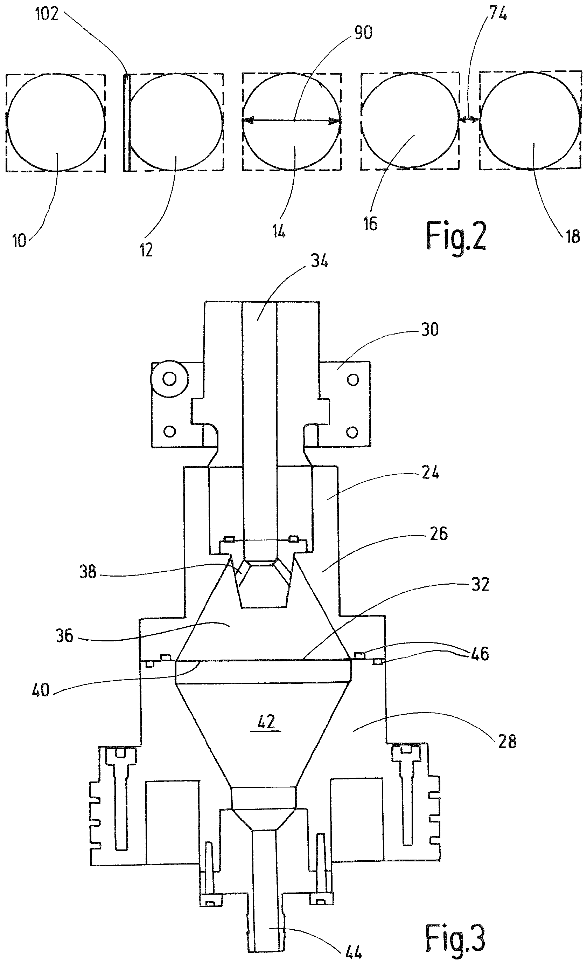

Wie sich des Weiteren aus der Figur 1 ergibt, sind alle Stationen 10 bis 18 in linearer Reihenfolge hintereinander angeordnet und wie insbesondere die Figur 3 zeigt, weist die erste Station 10 einen mittels eines Aktuators öffen- und schließbaren Membranhalter 24 auf. Der Membranhalter weist zwei Gehäusehälften 26, 28 auf, wobei die obere Gehäusehälfte 26 mittels eines Halters 30 stationär an der Vorrichtung festgelegt ist und die untere Gehäusehälfte 28 lässt sich mittels des nicht näher dargestellten Aktuators, beispielsweise in Form eines Pneumatik-Linearzylinders, von der in der Figur 3 gezeigten Schließstellung nach unten, vertikal von der oberen Gehäusehälfte 26 wegbewegen, wobei die Trennung entlang einer Trennstelle 32 zum Herbeiführen der geöffneten Stellung zwischen den Gehäusehälften 26, 28 stattfindet.

Die obere Gehäusehälfte 26 weist einen Zulauf 34 auf, über den die Probe von dem abgespülten, zu prüfenden Bauteil in eine Kammer 36 über einen Diffusor 38 zugeführt wird. Die Kammer 36 ist nach unten hin von einem Stützgitter 40 abgeschlossen, auf dessen Oberseite das Membranmaterial 20 entlanggeführt wird. Unterhalb des Stützgitters 40 mit dem Membranmaterial 20 ist eine Ablaufkammer 42 angeordnet, an die ein Ablauf 44 anschließt zwecks Abfuhr der Reinigungsflüssigkeit aus dem Membranhalter 24. Insoweit ist eine nicht näher dargestellte flexible Ablaufleitung an den Ablauf 44 angeschlossen und bei Beschickung des Membranhalters 24 mit einer Probenflüssigkeit, bleibt die Probe auf der Oberseite des Membranmateriales 20 in dem geschlossenen Membranhalter 24 liegen und die flüssigen Bestandteile verlassen den Membranhalter 24 nach Durchlaufen des Stützgitters 40 über die Ablaufkammer 42 und den Ablauf 44. Über Dichtringe 46 sind die Kammern 36 und 42 im geschlossenen Zustand des Membranhalters 24 gegenüber der Umgebung abgedichtet und es können nicht ungewollt im geschlossenen Zustand des Membranhalters 24 Bestandteile der Probe vom Membranmaterial 20 in die Umgebung gelangen. Der einfacheren Darstellung wegen sind nicht alle Komponenten des Membranhalters 24 in der Figur 1 wiedergegeben, insbesondere nicht die Zu- und Ablaufleitungen.

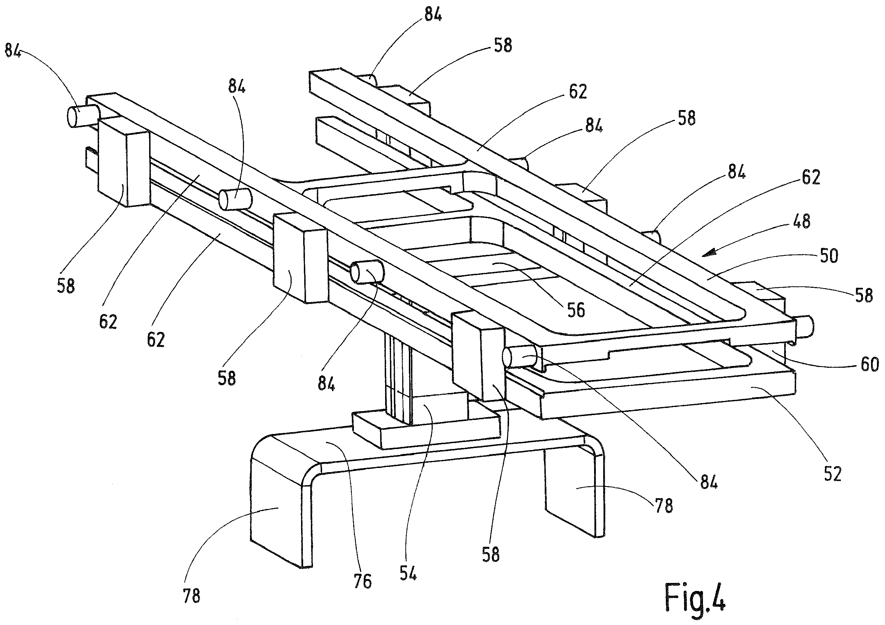

Für den Transport des Membranmaterials 20 dient eine als Ganzes mit 48 bezeichnete Transorteinrichtung, wie sie näher in der Figur 4 mit ihren wesentlichen Komponenten dargestellt ist. Die Transporteinrichtung 48 weist ein oberes Rahmenteil 50 und ein unteres Rahmenteil 52 auf, das mittels eines weiteren Aktuators 54, vorzugsweise in Form eines Pneumatik-Linearzylinders, auf das obere Rahmenteil 50 zustellbar ist oder wieder in einer Ausgangsstellung gemäß der Darstellung nach der Figur 4 zurückbewegt werden kann. Hierfür sitzt das untere Rahmenteil 50 auf einer Quertraverse 56 auf, an deren Unterseite in Blickrichtung auf die Figur 4 gesehen, die Kolbenstange des Aktuators 54 angreift. Für die dahingehende Verfahrbewegung des unteren Rahmenteiles 52 relativ zu dem in der Vorrichtung stationär angeordneten oberen Rahmenteil 50 dienen einzelne Längsführungen 58, die seitlich nach außen über die balkenförmigen Rahmenteile 50, 52 vorstehen. Bewegt sich das untere Rahmenteil 52 in Blickrichtung auf die Figur 4 gesehen nach oben, begrenzt diese mit dem oberen Rahmenteil 50 einen Klemmspalt 60, in dem sich das Membranmaterial 20 festlegen respektive festklemmen lässt. Hierfür ist das Membranmaterial 20 zwischen den seitlichen Längsstäben 62 der beiden Rahmenteile 50, 52 geführt.

Zum Zuführen des Membranmaterials 20 zwischen die beiden Rahmenteile 50, 52 dient eine Bevorratungsrolle 64 (Figur 1), von der sich das Membranmaterial 20 sukzessive abwickeln lässt. Oberhalb der Bevorratungsrolle 64 ist noch eine Umlenkrolle 66 seitlich in Lagerböcken geführt, um ein konstantes Abwickeln des Membranmaterials 20 von der Rolle 64 zu ermöglichen. Ist das Membranmaterial 20 erst einmal zwischen die Rahmenteile 50, 52 eingeführt, beispielsweise indem das Membranmaterial 20 die erste Station 10 mit dem Membranhalter 24 erreicht, kann das untere Rahmenteil 52 mittels des Aktuators 54 auf das stationäre obere Rahmenteil 50 unter Bildung des Klemmspaltes 60 zugefahren werden und das Membranmaterial 20 ist dann zwischen den Längsstäben 62 der Rahmenteile 50, 52 gehalten. Mittels eines weiteren dritten Aktuators 68 in Form zweier Linearzylinder 70, 72 (Figur 1) lässt sich dann die geklemmte Transporteinrichtung 48 als Ganzes horizontal von einer rückwärtigen Position gemäß der Darstellung nach der Figur 1 in eine vordere Position schrittweise verfahren, wobei die vorzugsweise konstante Schrittweite 74 (Figur 2) durch den Abstand der einzelnen Positionen 10, 12, 14, 16, 18 voneinander bestimmt ist.

Für die dahingehende horizontale Verfahrbewegung mittels des dritten Aktuators 68 sitzt der zweite Aktuator 54 fußseitig auf einer bügelartigen Konsole 76 auf, die mit ihren nach unten seitlich vorkragenden Festlegeflächen 78 innenseitig an den beiden Winkelblechen 80 festgelegt sind, die auf einem horizontal längsverfahrbaren Support 82 des dritten Aktuators 68 festgelegt sind. Für eine stabile Befestigung sind insoweit einzelne Festlegepunkte 84 am oberen Rahmenteil 50 mit den genannten Winkelblechen 80 über eine Schraubverbindung fest verbunden. Dergestalt wird also über die beiden Winkelbleche 80 bei einer Ansteuerung des dritten Aktuators 68, die gesamte Transporteinrichtung 48 mitbewegt, und zwar von einer hinteren, in der Figur 1 gezeigten Ausgangsstellung nach vorne, bis das Membranmaterial 20 alle Stationen 10, 12, 14, 16, 18 überfahren hat und von der vordersten Stellung wieder zurück in die in Figur 1 gezeigte Ausgangsstellung.

Zur Stabilisierung des oberen Rahmenteils 50 dient eine Stützeinrichtung 86 (nur in Fig. 1 dargestellt), die als Quersteg ausgebildet sich quer zu den beiden Längsstäben 62 erstreckt. Ein entsprechender Quersteg ist auch für das untere Rahmenteil vorgesehen. Die Längsführung der Membran endet mit einer Ausschleussstation 88, zwecks Abgabe des verbrauchten Membranmaterials an einen nicht näher dargestellten Entsorgungsbehälter.

Im Bereich der genannten Ausschleusstrecke oder Ausschleusstation 88 ist in Verfahrrichtung des Membranmaterials 20 gesehen, hinter der letzten fünften Station 18 eine Klemmeinrichtung 92 vorhanden, die mittels eines weiteren vierten Aktuators 94 eine Klemmung oder Freigabe des Membranmaterials 20 ermöglicht. Der vierte Aktuator 94 ist wiederum bevorzugt als Pneumatik-Linearzylinder ausgebildet und weist an seinem unteren freien Ende eine Spannbacke 96 auf, die auf die obere Seite des Membranmaterials einwirkend eine Klemmung ermöglicht. Dergestalt lässt sich im Rahmen der Probenextraktion mittels geschlossenem Membranhalter 24 und geschlossener Klemmeinrichtung 92 das Membranmaterial 20 sich klemmend am Eingang und am Ausgang der Vorrichtung definiert festlegen, so dass es nicht ungewollt im dazwischenliegenden Bahnenmaterial der Membran 20 zu Verwerfungen kommen kann, was sich eventuell nachteilig auf den Transport der Membran 20 mittels der Transporteinrichtung 48 auswirken könnte.

Wie die Figur 1 weiter zeigt, ist die Vorrichtung mittels Ständerbeinen 98 vor Ort aufständerbar; bei einer bevorzugten Ausführungsform ist jedoch vorgesehen, dass die Gesamtvorrichtung, beispielsweise mittels eines Wagens transportierbar ist, so dass vor Ort eine Beprobung stattfinden kann.

Für die Funktion der gesamten Prüfvorrichtung auf Technische Sauberkeit, ist die Kamera 22 von besonderer Bedeutung, die als sogenannte Zeilenkamera konzipiert ist, wobei ein Sensorstrahl 102 als flächiger Detektorvorhang in der Figur 1 wiedergegeben sind und das freie Ende des Sensorstrahls bildet mit einer vorgebbaren Breite die jeweilige Scanzeile 102 aus (Figur 2), die quer zur Verfahrrichtung des Membranmaterials 20 verläuft. Solche Kameras 22, beispielsweise in Form einer 8K-Zeilenkamera, sind von der Firma Basler AG zu erhalten und eine Messgenauigkeit zwischen 5 und 10 Pixel genügt in jedem Fall, die in der Praxis auftretenden Partikelgrößen, beispielsweise ab 50*µ*m, sehr gut erkennen zu können. Zur Verbesserung der Funktionsfähigkeit der Kamera 22 kann die Vorrichtung noch eine entsprechende Leuchte 104 aufweisen, die das auszuwertende Messgebiet an der zweiten Station 12 ausleuchtet.

Mit der erfindungsgemäßen Vorrichtung lässt sich eine Prüfung der Technischen Sauberkeit von Bauteilen weitgehend automatisieren und eine Vielzahl von Membranauswertungen sind in kurzer zeitlicher Abfolge möglich, was im Rahmen praktischer Anforderungen eine hohe Genauigkeit ergibt. Ferner ist eine Probendokumentation möglich. Dies hat so keine Entsprechung im Stand der Technik.

## Patentansprüche

1. Vorrichtung zur Prüfung der Technischen Sauberkeit, zumindest bestehend aus einer ersten Station (10), in der ein Membranmaterial (20) mit einer Probe beschickt wird und etwaig in der Probe vorhandene Verschmutzungen sich auf dem Membranmaterial (20) ablagern und mit einer zweiten Station (12), in der die Probe der ersten Station (10) einer optischen Prüfung unter Einsatz einer Kamera (22) unterzogen ist.

2. Vorrichtung nach Anspruch 1, **dadurch gekennzeichnet, dass** der zweiten Station (12) mindestens eine weitere, dritte Station (14) nachfolgt, die dem Ausschleusen der Probe nach der Kameraauswertung dient.

3. Vorrichtung nach Anspruch 1 oder 2, **dadurch gekennzeichnet, dass** zumindest die beiden ersten Stationen (10, 12) vorzugsweise alle Stationen (10, 12, 14, 16, 18) in linearer Reihenfolge hintereinander angeordnet sind.

4. Vorrichtung nach einem der vorstehenden Ansprüche, **dadurch kennzeichnet, dass** die erste Station (10) einen mittels eines Aktuators öffen- und schließbaren Membranhalter (24) aufweist, der im geöffneten Zustand das Ein- und Ausbringen des Membranmateriales (20) erlaubt und im geschlossenen Zustand das Aufbringen der Probe.

5. Vorrichtung nach einem der vorstehenden Ansprüche, **dadurch kennzeichnet, dass** für den Transport des Membranmaterials (20) eine Transporteinrichtung (48) dient, die mittels eines weiteren Aktuators (54) öffen- und schließbar ist und die im geschlossenen Zustand mittels eines weiteren dritten Aktuators (68) zusammen mit dem Membranmaterial (20) quer zu einer Schließrichtung des Membranhalters (24) bewegbar ist.

6. Vorrichtung nach einem der vorstehenden Ansprüche, **dadurch kennzeichnet, dass** das Membranmaterial (20) sich von einer Bevorratungsrolle (64) mittels der Transporteinrichtung (48) abwickeln lässt.

7. Vorrichtung nach einem der vorstehenden Ansprüche, **dadurch kennzeichnet, dass** im Bereich einer Ausschleussstation (88) für das Membranmaterial (20) eine Klemmeinrichtung (92) vorhanden ist, die mittels eines weiteren vierten Aktuators (94) eine Klemmung oder Freigabe des Membranmateriales (20) vornimmt.

8. Vorrichtung nach einem der vorstehenden Ansprüche, **dadurch kennzeichnet, dass** die Kamera (22) eine Zeilenkamera ist, deren Abtastzeilen quer zur Verfahrrichtung des Membranmaterials (20) verlaufen.

9. Verfahren zum Durchführen eines Betriebes mit einer Vorrichtung nach einem der vorstehenden Ansprüche, **dadurch kennzeichnet, dass** das Membranmaterial (20) beim Aufbringen der Probe im geschlossenen Membranhalter (24) in der ersten Station (10) festgelegt ist und bei geöffnetem Membranhalter (24) mit Transport des Membranmaterials (20) mittels der Transporteinrichtung (48) die Zeilenabtastung mittels der Zeilenkamera (22) in der zweiten Station (12) erfolgt.
